# EUROPEAN PATENT APPLICATION

(11) **EP 4 492 527 A1**
(43) Date of publication of application: **15.01.2025**
(21) Application number: 24176828.2
(22) Date of filing: 20.05.2024
(51) Int. Cl.: H01M 10/42, H01M 50/147, H01M 50/30, H01M 50/342, H01M 10/0525, H01M 10/052

(54) **LITHIUM BATTERY EXPLOSION-PROOF STRUCTURE WITH BUILT-IN BMS BOARD**

(30) Priority: 11.07.2023 CN 202321813480 U
(71) Applicant: Shenzhen Totalfuture Technology Co.,Ltd., Shenzhen (CN)
(72) Inventor: ZENG, Jinhui, Shenzhen (CN); YANG, Dexin, Shenzhen (CN); LIU, Qiangen, Shenzhen (CN); LIU, Haiyan, Shenzhen (CN)
(74) Representative: Zaboliene, Reda

(57) **Abstract**

Disclosed is a lithium battery explosion-proof structure with a built-in BMS board, including a positive plastic cover, a steel housing and a battery roll core; an inner side of the steel housing being nested and installed with the battery roll core, and an upper end of the steel housing being butted with a plastic bracket; an inner end of the plastic bracket being nested and installed with a positive aluminum cover, and a lower end of the positive aluminum cover being butted with a positive aluminum cover thinwalled circle; an inner end of the positive aluminum cover being nested and installed with a BMS mainboard, and a lower part of a positive column step of the BMS mainboard being provided with PCBA bleeder ports; an inner side of an upper end of the BMS mainboard being nested and installed with a negative hardware ring, and an inner side of the negative hardware ring being nested and installed with the positive plastic cover. Compared with the single structure explosion-proof in the market, the lithium battery explosion-proof structure with a built-in BMS board has multiple safety measures. In addition to a smooth physical pressure relief structure, it also has a BMS circuit monitoring, which can proactively disconnect abnormal circuit and avoid continuous abnormality inside a cell, and can effectively prevent lithium battery from exploding due to accidents.

## Description

### Technical Field

The invention relates to the technical field of lithium batteries, in particular to a lithium battery explosion-proof structure with a built-in BMS board.

### Background Art

With the continuous advancement of science and technology, lithium batteries used in electric vehicles and other occasions are gradually popularized, but they have certain safety risks in the process of use, such as short circuit, overcharge, overdischarge and other problems, which are prone to lead to fire or explosion accidents. In order to ensure the safety performance of lithium batteries, explosion-proof measures are necessary;
For example, an explosion-proof lithium battery with the publication number CN212162016U belongs to the technical field of lithium batteries. The explosion-proof lithium battery includes: a lithium battery main body, a bottom cover, an isolation layer, a cover plate and an electrode. The center of an upper surface of the cover plate is provided with a circular opening connected to the battery interior, a surface of the cover body is provided with a plurality of through holes, the outside of the cover body is wrapped with a corrugated cover. The explosion-proof lithium battery can collect and store the abnormal gas generated inside the lithium battery due to the temperature rise by setting the corrugated cover connected with pins, and can adjust the storage space of the corrugated cover by itself with the change of the volume of the gas, and can be easily removed when the storage is full to discharge the abnormal gas into the abnormal gas treatment device;
Currently, there are many explosion-proof structures of lithium batteries on the market, but their limitation is that they usually only use pure structural safety measures, and it is difficult to completely avoid accidents, resulting in its overall protective performance cannot be guaranteed, which in turn produces more accidents, and there are certain safety hazards. Therefore, the invention provides an explosion-proof structure of lithium battery with a BMS board, which effectively avoids accidents.

### Summary of the Invention

An object of the invention is to provide a lithium battery explosion-proof structure with a built-in BMS board, so as to solve the limitation proposed in the above-mentioned background art in that only pure structural safety measures are usually adopted, and it is difficult to completely avoid accidents, resulting in its overall protective performance cannot be guaranteed, which in turn produces more accidents, and there are certain safety hazards.
In order to achieve the above object, the invention provides the following technical solution: a lithium battery explosion-proof structure with a built-in BMS board, including a positive plastic cover, a negative hardware ring, a positive aluminum cover, a plastic bracket, a steel housing and a battery roll core;
An inner side of the steel housing is nested and installed with the battery roll core, and an upper end of the steel housing is butted with the plastic bracket;
An inner end of the plastic bracket is nested and installed with the positive aluminum cover, and a lower end of the positive aluminum cover is butted with a positive aluminum cover thin-walled circle;
An inner end of the positive aluminum cover is nested and installed with a BMS mainboard, and a lower part of a positive column step of the BMS mainboard is provided with PCBA bleeder ports;
An inner side of an upper end of the BMS mainboard is nested and installed with the negative hardware ring, and an inner side of the negative hardware ring is nested and installed with the positive plastic cover, and an inner side of the positive plastic cover is provided with positive plastic cover bleeder ports.

Further, the inner end of the positive plastic cover is symmetrically provided with positive plastic cover bleeder ports, and the positive plastic cover is nested and butted with an inner end of the negative hardware ring. The combination of multi-layer structure effectively isolates the internal and external environments, increasing the safety performance of the lithium battery.

Further, an inner end of the BMS mainboard is provided with two PCBA bleeder ports, and the PCBA bleeder ports are staggered with the positive plastic cover bleeder ports on a surface of the positive plastic cover.

Further, the positive aluminum cover thin-walled circle at the inner end of the positive aluminum cover ruptures when pressurized, and discharges the gas at the inner end of the plastic bracket outwardly along the two PCBA bleeder ports.

Further, the steel housing wraps the battery roll core for protection, and an upper end of the steel housing and the plastic bracket butt against each other.

Further, the plastic bracket is nested and butted with the positive plastic cover, the negative hardware ring, the BMS mainboard, the positive aluminum cover, and the plastic bracket to form a multi-layer combination structure. By combining various safety measures, including special physical structure and BMS board chip control, etc., the safety performance is improved, the occurrence of accidents is effectively avoided through real-time monitoring of the BMS module.

Compared with the prior art, the invention has the following beneficial effects:
1. The lithium battery explosion-proof structure with a built-in BMS board improves safety performance and effectively avoids accidents by combining a variety of safety measures, including special physical structure and BMS board chip control. Through real-time monitoring of the BMS module, the battery's data, such as current, temperature, and voltage can be obtained in time to deal with the abnormal situation and proactively disconnect the abnormal circuits, so as to improve safety performance;
2. The lithium battery explosion-proof structure with a built-in BMS board effectively isolates the internal and external environments and increases the safety performance of lithium battery through the combination of multi-layer structure of the positive aluminum cover, the BMS board and the plastic bracket; a circular thin position is pressed out in the middle of the positive aluminum cover, when an interior of a cell suffers from abnormalities, resulting in an increase in internal pressure and when the internal pressure increases to a danger threshold, the thin position is preferentially ruptured to discharge excessive internal gas, thus preventing the explosion.

### Brief Description of the Drawings

FIG. 1 is a three-dimensional schematic view of a plastic bracket of the invention;
FIG. 2 is an exploded schematic view of a positive plastic cover of the invention;
FIG. 3 is a front section view of the positive plastic cover of the invention;
FIG. 4 is a front view of a battery roll core of the invention; and
FIG. 5 is a top view of the positive plastic cover of the invention;

In the drawings: 1. positive plastic cover; 2. negative hardware ring; 3. BMS mainboard; 4. positive aluminum cover; 5. plastic bracket; 6. positive plastic cover bleeder port; 7. PCBA bleeder port; 8. positive aluminum cover thin-walled circle; 9. steel housing; 10. battery roll core.

### Detailed Description of the Invention

The technical solutions in the embodiments of the invention will be clearly and completely described in conjunction with the accompanying drawings in the embodiments of the invention, and obviously, the described embodiments are only some embodiments of the invention, not all embodiments. Based on the embodiments of the invention, all other embodiments obtained by those skilled in the art without creative labor belong to the scope of protection of the invention.

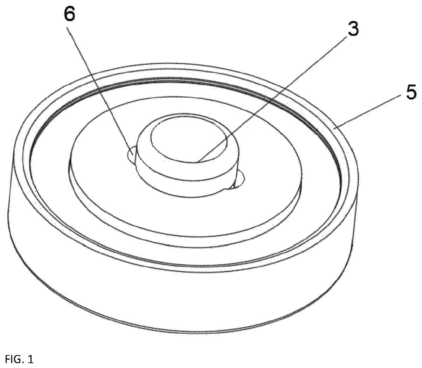

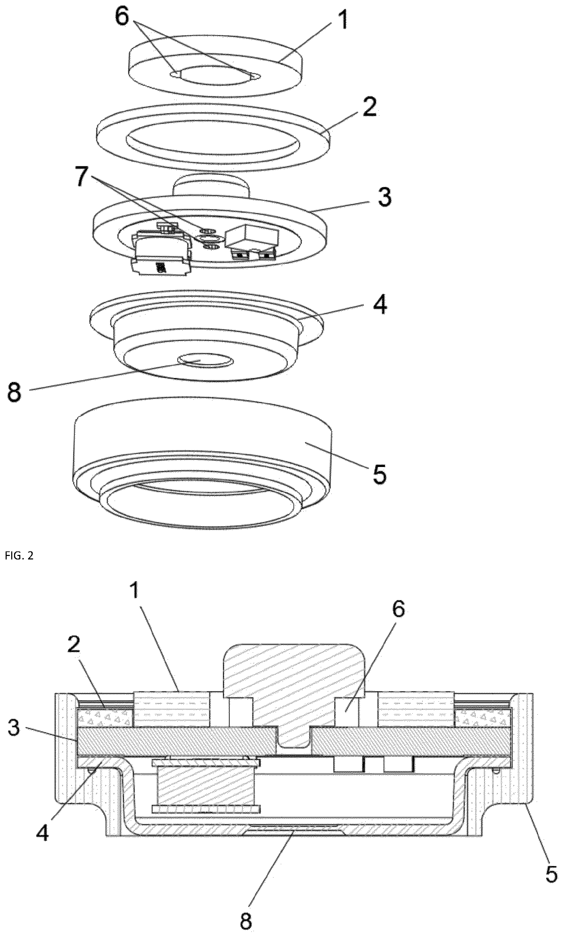

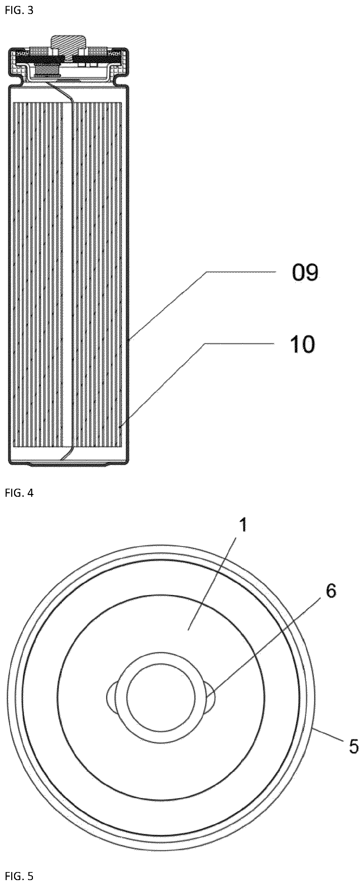

Referring to FIG. 1 to FIG. 5, the invention provides a technical solution: a lithium battery explosion-proof structure with a built-in BMS board, including a positive plastic cover 1, a negative hardware ring 2, a BMS mainboard 3, a positive aluminum cover 4, a plastic bracket 5, positive plastic cover bleeder ports 6, PCBA bleeder ports 7, a positive aluminum cover thin-walled circle 8, a steel housing 9, and a battery roll core 10.

### In the embodiment:

An inner side of the steel housing 9 is nested and installed with the battery roll core 10, and an upper end of the steel housing 9 is butted with the plastic bracket 5; an inner end of the plastic bracket 5 is nested and installed with the positive aluminum cover 4, and a lower end of the positive aluminum cover 4 is butted with the positive aluminum cover thin-walled circle 8; an inner end of the positive aluminum cover 4 is nested and installed with the BMS mainboard 3, and a lower part of a positive column step of the BMS mainboard 3 is provided with the PCBA bleeder ports 7; an inner side of an upper end of the BMS mainboard 3 is nested and installed with the negative hardware ring 2, an inner side of the negative hardware ring 2 is nested and installed with the positive plastic cover 1, and an inner side of the positive plastic cover 1 is provided with the positive plastic cover bleeder ports 6.

An inner end of the positive plastic cover 1 is symmetrically provided with the positive plastic cover bleeder ports 6, and the positive plastic cover 1 is nested and butted with an inner end of the negative hardware ring 2. An inner end of the BMS mainboard 3 is provided with two PCBA bleeder ports 7, and the PCBA bleeder ports 7 are staggered with the positive plastic cover bleeder ports 6 on a surface of the positive plastic cover 1. The positive aluminum cover thin-walled circle 8 at the inner end of the positive aluminum cover 4 ruptures when pressurized, and discharges the gas at the inner end of the plastic bracket 5 outwardly along the two PCBA bleeder ports 7. The steel housing 9 wraps the battery roll core 10 for protection, and the upper end of the steel housing 9 and the plastic bracket 5 butt against each other. The plastic bracket 5 is nested and butted with the positive plastic cover 1, the negative hardware ring 2, the BMS mainboard 3, the positive aluminum cover 4, and the plastic bracket 5 to form a multi-layer combination structure.

Through real-time monitoring of a BMS module in the BMS mainboard 3, the battery's data, such as current, temperature, and voltage can be obtained in time to deal with abnormal situations and proactively disconnect the abnormal circuits, so as to improve safety performance; the combination of a multi-layer structure of the positive aluminum cover 4, the BMS mainboard 3, and the plastic bracket 5 effectively isolates the internal and external environments, increasing the safety performance of the lithium battery.
At the same time, the positive aluminum cover thin-walled circle 8 is pressed out in the middle of the positive aluminum cover 4. When an interior of a cell suffers from abnormalities, resulting in an increase in internal pressure, and when the internal pressure increases to a danger threshold, the positive aluminum cover thin-walled circle 8 is preferentially ruptured to discharge excessive internal gas, thus preventing the explosion;
Two PCBA bleeder ports 7 are provided at a lower part of the positive column step of the BMS mainboard 3 and can prevent man-made or abnormal blocking. Two positive plastic cover bleeder ports 6 are provided on the positive plastic cover 1 and can be ventilated with the ports on the BMS mainboard 3 in 360° all angles. When the positive aluminum cover thin-walled circle 8 raptures, the gas enters the BMS mainboard 3, and can be discharged smoothly through the above two sets of positive plastic cover bleeder ports 6 and PCBA bleeder ports 7 to external environment to avoid the explosion of the lithium battery;
Compared with the single structure explosion-proof in the market, the lithium battery explosion-proof structure with a built-in BMS board has multiple safety measures. In addition to a smooth physical pressure relief structure, it also has a BMS circuit monitoring, which can proactively disconnect abnormal circuit, avoiding continuous abnormality inside a cell, and can effectively prevent lithium battery from exploding due to accidents.

In the description of the invention, unless otherwise stated, "multiple" means two or more; the terms "up", "down", "left", "right", "inside", "outside", "front end", "back end", "head", "tail", etc., indicate orientations or positional relationships based on the orientations or positional relationships shown in the drawings and are for convenience and simplification of the description only, and do not indicate or imply that the device or element referred to must have a particular orientation, be constructed and operated in a particular orientation, and therefore cannot be understood as a limitation on the invention. In addition, the terms "first", "second", "third", etc. are used for descriptive purposes only and cannot be understood as indicating or implying relative importance.

In the description of the invention, it is to be noted that unless otherwise expressly specified and defined, the terms "linked" and "connected" should be understood in a broad sense, for example, the connection may be a fixed connection, or a detachable connection, or a integrally connection; the connection may be mechanical or electrical; and may be direct or indirect through an intermediate medium. For those skilled in the art, the specific meanings of the above-mentioned terms in the invention may be understood in specific cases.

Although the invention has been described in detail with reference to the above-mentioned embodiments, for those skilled in the art, it is still possible to modify the technical solutions recorded in the above-mentioned embodiments, or to make equivalents for some of the technical features thereof. Any modifications, equivalents, and improvements made within the spirit and principles of the invention are intended to be included within the scope of the invention.

## Claims

1. A lithium battery explosion-proof structure with a built-in BMS board, **characterized by** comprising a positive plastic cover (1), a negative hardware ring (2), a positive aluminum cover (4), a plastic bracket (5), a steel housing (9) and a battery roll core (10);
wherein an inner side of the steel housing (9) is nested and installed with the battery roll core (10), and an upper end of the steel housing (9) is butted with the plastic bracket (5);
an inner end of the plastic bracket (5) is nested and installed with a positive aluminum cover (4), and a lower end of the positive aluminum cover (4) is butted with a positive aluminum cover thin-walled circle (8);
an inner end of the positive aluminum cover (4) is nested and installed with a BMS mainboard (3), and a lower part of a positive column step of the BMS mainboard (3) is provided with PCBA bleeder ports (7);
an inner side of an upper end of the BMS mainboard (3) is nested and installed with the negative hardware ring (2), and an inner side of the negative hardware ring (2) is nested and installed with the positive plastic cover (1), and an inner side of the positive plastic cover (1) is provided with positive plastic cover bleeder ports (6).

2. The lithium battery explosion-proof structure with a built-in BMS board of claim 1, **characterized in that** an inner end of the positive plastic cover (1) is symmetrically provided with positive plastic cover bleeder ports (6), and the positive plastic cover (1) is nested and butted with an inner end of the negative hardware ring (2).

3. The lithium battery explosion-proof structure with a built-in BMS board of claim 1, **characterized in that** an inner end of the BMS mainboard (3) is provided with two PCBA bleeder ports (7), and the PCBA bleeder ports (7) are staggered with the positive plastic cover bleeder ports (6) on a surface of the positive plastic cover (1).

4. The lithium battery explosion-proof structure with a built-in BMS board of claim 1, **characterized in that** the positive aluminum cover thin-walled circle (8) at the inner end of the positive aluminum cover (4) ruptures when pressurized, and discharges the gas at the inner end of the plastic bracket (5) outwardly along the two PCBA bleeder ports (7).

5. The lithium battery explosion-proof structure with a built-in BMS board of claim 1, **characterized in that** the steel housing (9) wraps the battery roll core (10) for protection, and the upper end of the steel housing (9) and the plastic bracket (5) butt against each other.

6. The lithium battery explosion-proof structure with a built-in BMS board of claim 1, **characterized in that** the plastic bracket (5) is nested and butted with the positive plastic cover (1), the negative hardware ring (2), the BMS mainboard (3), the positive aluminum cover (4), and the plastic bracket (5) to form a multi-layer combination structure.
